# EUROPEAN PATENT APPLICATION

(11) **EP 4 209 811 A1**
(43) Date of publication of application: **12.07.2023**
(21) Application number: 22217394.0
(22) Date of filing: 30.12.2022
(51) Int. Cl.: G02B 6/036

(54) **ULTRA-LOW LOSS OPTICAL FIBERS FOR LONG HAUL COMMUNICATIONS**

(30) Priority: 05.01.2022 IN 202211000672
(71) Applicant: Sterlite Technologies Limited, Haryana 122002 (IN)
(72) Inventor: Reddy Munige, Srinivas, 122002 Gurugram (IN); Malviya, Apeksha, 122002 Gurugram (IN); Pandey, Anand, 122002 Gurugram (IN)
(74) Representative: Petraz, Gilberto Luigi

(57) **Abstract**

The present disclosure relates to an ultra-low loss optical fiber for long haul communications (100) comprising a core region (102) defined by a core relative refractive index and a cladding region surrounding the core region, defined by a cladding relative refractive index. In particular, the core region comprises a relative refractive index in a range of -0.06% to +0.06% and the cladding region is down-doped for entire radial cladding thickness. Moreover, the cladding region further comprises an inner cladding region (104) defined by an inner cladding relative refractive index and an outer cladding region (106) defined by an outer cladding relative refractive index. The inner cladding relative refractive index is less than the outer cladding relative refractive index.

## Description

### TECHNICAL FIELD

Embodiments of the present disclosure relate to the field of optical fiber and more particularly, relates to ultra-low loss optical fibers for long haul communications.

This application claims the benefit of Indian Application No.202211000672 titled "ULTRA-LOW LOSS OPTICAL FIBERS FOR LONG HAUL COMMUNICATIONS" filed by the applicant on January 5, 2022 which is incorporated herein by reference in its entirety.

### BACKGROUND ART

Telecommunications networks include access networks where end-user subscribers connect to service providers. With the advancement of science and technology, various modern technologies are being employed for communication purposes. One of the most important modern communication technologies is optical fiber communication technology using a variety of optical fibers.

Being a critical component of a modern communication network across the globe, optical fiber cables are widely used for communication to meet the increasing demands. Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

To provide improved performance to subscribers, fiber optic networks are increasingly providing optical fiber connectivity directly to the subscribers. As part of various fiber-to-the-premises (FTTP), fiber-to-the-home (FTTH), and other initiatives (generally described as FTTX), such fiber optic networks are providing the optical signals from distribution cables through local convergence points ("LCPs") to fiber optic cables, such as drop cables, that are run directly to the subscribers' premises. Thus, installation of the optical fiber cables at a rapid pace has become essential.

Optical fibers are used to transmit information as light pulses from one end to another. One such type of optical fiber is a single mode optical fiber. Generally the two main categories of optical fibers are multimode fibers and single-mode fibers. In a multimode optical fiber, for a given wavelength, several optical modes are propagated simultaneously along the optical fiber, whereas in a single-mode optical fiber, the higher order modes are strongly attenuated. A single mode fiber is an optical fiber that is designed for the transmission of a single spatial mode of light as a carrier. This mode of light may contain a variety of different wavelengths, although the range of wavelengths that can be transmitted is a function of the diameter of the core of the fiber.

The telecommunications industry is continuously striving for designs to achieve high data rate capacity and low losses. Single-mode optical fibers that are compliant with the ITU-T G.652.D requirements are commercially available and the ongoing research suggests that the single mode optical fiber of G657 and G652D categories are used for the FTTx and long-haul applications. Currently, there are a few patent applications employing single mode fibers for the FTTx and long-haul applications.

US patent application no. US8712199B2 titled 'Configurable pitch reducing optical fiber array" discloses at least one extending longitudinal waveguide comprising one of a standard single mode fiber, a standard multimode fiber, and a standard large mode area fiber.

US patent application no. US9134519B2 titled "Multi-mode fiber optically coupling a radiation source module to a multi-focal confocal microscope" discloses an optical fiber that may be a multi-mode fiber or a single mode fiber.

However, there are a number of drawbacks in the current technologies providing single mode fibers for the FTTx and long-haul applications. The single mode optical fiber of G652D and G657 categories discloses in the prior arts face major challenges in 400G transmission in territorial long haul communication systems due to non-linear effects that occur due to small effective area, higher attenuation and low SNR (Signal-to-Noise Ratio). Moreover, single mode fibers can only operate as such over a limited spectral range. Above a given upper cutoff wavelength the fiber is too small to transmit light. Below a lower cutoff wavelength, the light is no longer transmitted in a single mode.

Accordingly, to overcome the disadvantages of the prior arts, there is a need for a technical solution that overcomes the above-stated limitations in the prior arts. The present disclosure provides an ultra-low loss optical fiber for long haul communications.

### SUMMARY OF THE DISCLOSURE

Embodiments of the present disclosure provide an ultra-low loss optical fiber for long haul communications. In particular, the optical fiber comprises a core region defined by a core relative refractive index and a cladding region surrounding the core region, defined by a cladding relative refractive index. Moreover, the cladding region is down-doped for entire radial cladding thickness and the core region comprises a relative refractive index in a range of -0.06% to +0.06%. Further, the cladding region comprises an inner cladding region and an outer cladding region.

According to the first aspect of the present disclosure, inner cladding region is defined by an inner cladding relative refractive index and the outer cladding region is defined by an outer cladding relative refractive index. In particular, the inner cladding relative refractive index is less than the outer cladding relative refractive index. Moreover, the inner cladding relative refractive index ranges between -0.29% and -0.32% and the outer cladding relative refractive index ranges between -0.24% and -0.28%. Further, the inner cladding region is defined by an inner cladding radius ranging between 21 µm and 25 µm and the inner cladding relative refractive index ranging between -0.29% and - 0.32% and the outer cladding region is defined by an outer cladding radius of 62.5+0.7 µm and the outer cladding relative refractive index ranging between - 0.24% and -0.28%. The inner cladding relative refractive index is less than the outer cladding relative refractive index.

According to a second aspect of the present disclosure, the inner cladding region has a first fluorinated region T1 defined by a thickness r₂ - r₁, which is a difference between the inner cladding radius and the core radius. The outer cladding region has a second fluorinated region T2 defined by a thickness r₃ - r₂, which is a difference between the outer cladding radius and the inner cladding radius.

According to a third aspect of the present disclosure, the optical fiber is characterized by an attenuation of less than or equal to 0.17 dB/km at 1550 nm wavelength and an attenuation of less than or equal to 0.20 dB/km at 1625 nm wavelength and a mode field diameter (MFD) of 12.5±0.5 at 1550 nm wavelength. The optical fiber has a macro-bend loss of less than or equal to 0.1 dB per 100 turns at 30 mm radius and at 1625 nm wavelength and a macro-bend loss of less than or equal to 0.03 dB per 100 turns at 30 mm radius and at 1550 nm wavelength.

The foregoing solutions of the present disclosure are attained by employing ultra-low loss optical fibers for long haul communications.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a snapshot illustrating a cross-sectional view illustrating an optical fiber in accordance with one embodiment of the present disclosure;
Fig. 2 is a snapshot illustrating a refractive index profile of the optical fiber in accordance with one embodiment of the present disclosure;

### REFERENCE LIST

Optical fiber - 100
Core region - 102
Cladding region - 104
Inner clad region - 106
Outer clad region - 108
Central longitudinal axis - 110
Refractive index profile - 200
Cable - 300
Plurality of optical fiber bundles - 302
Sheath - 304

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
Optical fiber is a thin strand of glass or plastic or combination thereof capable of transmitting optical signals.

Relative refractive index is a measure of relative difference in refractive index between two optical materials.

Cut-off wavelength is a minimum wavelength in which the optical fiber acts as a single mode fiber and the chromatic dispersion is a phenomenon of optical signal spreading over time resulting from the different speeds of light rays.

Mode field diameter defines a section or area of optical fiber in which the optical signals travel.

Macro bend loss is defined by a loss occurred when an optical fiber cable is subjected to a significant amount of bending.

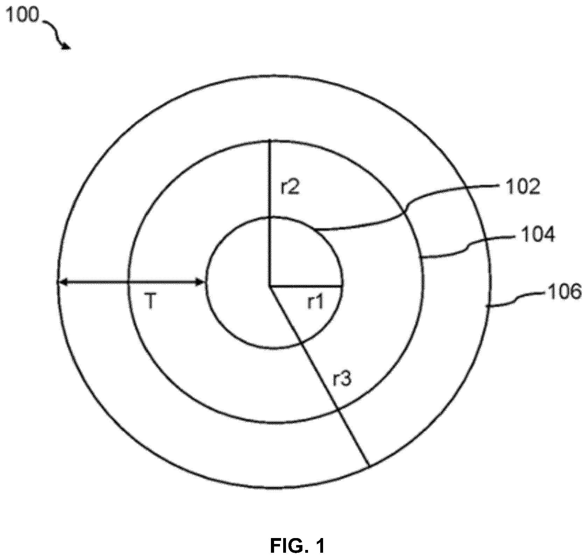

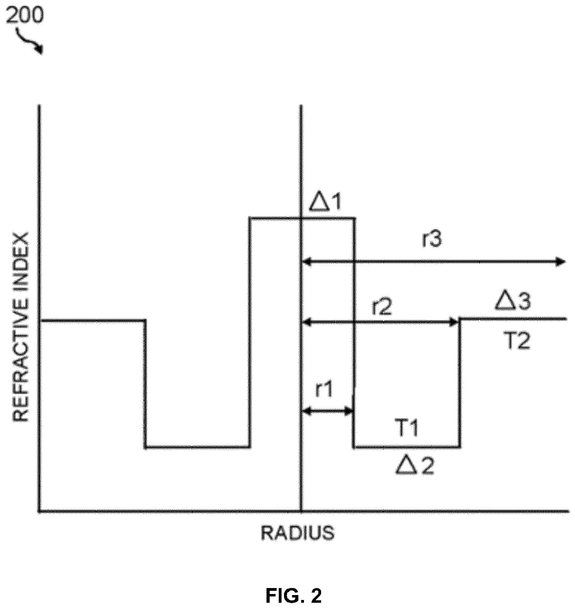

Fig. 1 is a snapshot illustrating a cross-sectional view of an ultra-low loss optical fiber in accordance with an embodiment of the present disclosure. Fig. 2 illustrates a refractive index profile of the ultra-low loss optical fiber in accordance with an embodiment of the present disclosure.

Referring to Fig.1 and Fig. 2., the optical fiber 100 is configured to transmit information over long distances with low non-linear effects. In particular, the optical fiber 100 may include a core region 102 and a cladding region. Moreover, the core region 102 may be formed by pure silica (aka "silica"). Further, the core region 102 may comprise a relative refractive index in a range of -0.06% to +0.06%. That is, the core region 102 may be the pure silica or the core region 102 may be up-doped or the core region 102 may be down-doped. The up-doping increases a refractive index of the silica, whereas the down-doping lowers the refractive index of the silica.

In accordance with an embodiment of the present disclosure, the dopant may be, but not limited to, germanium oxide (GeO2), fluorine, boron, chlorine, phosphorus. Preferably, the dopant is germanium oxide (GeO2).

The core region 102 may be defined by a core relative refractive index Δ1 and a core radius r1. The value of the core relative refractive index Δ1 may be between -0.06% and 0.06% depending upon doping of the core region 102 and the core radius r1 may be between 6.1 µm and 6.5 µm. Preferably, the value of the core relative refractive index Δ1 may be zero (0) and the core radius r1 may be 6.4 µm. Alternatively, the value of the core relative refractive index Δ1 and the core radius r1 may vary.

In accordance with an embodiment of the present disclosure, the core region 102 may be surrounded by the cladding region. In particular, the cladding region may be defined by a cladding relative refractive index and a cladding radius. Moreover, the cladding region may comprise an inner cladding region 104 and an outer cladding region 106. Further, the inner cladding region 104 may be defined by an inner cladding relative refractive index Δ2 and an inner cladding radius r2.

The outer cladding region 106 may be defined by an outer cladding relative refractive index Δ3 and an outer cladding radius r3. The inner cladding relative refractive index Δ2 may be less than the outer cladding relative refractive index Δ3. In particular, the value of the inner cladding relative refractive index Δ2 may be between -0.29% and -0.32% and the inner cladding radius r2 may be between 21 µm and 25 µm. Preferably, the value of the inner cladding relative refractive index Δ2 may be -0.30% and the inner cladding radius r2 may be 22 µm. Similarly, the value of the outer cladding relative refractive index Δ3 may be between -0.24% and -0.28% and the outer cladding radius r3 may be 62.5+0.7 µm. Preferably, the value of the outer cladding relative refractive index Δ3 may be -0.26% and the outer cladding radius r3 may be 62.5 µm. Alternatively, the value of the outer cladding relative refractive index Δ3 and the outer cladding radius r3 may vary.

In accordance with an embodiment of the present disclosure, the cladding region may be doped with a down-dopant, such as fluorine, for entire radial cladding thickness (T). Alternatively, other down-dopants (known to a person skilled in the art) may be used. The down-dopant has a propensity to lower the refractive index of the silica. Accordingly, the cladding region may have a fluorinated region. That is, the inner cladding region 104 may have a first fluorinated region T1 defined by a thickness r₂ - r₁ (i.e., difference between the inner cladding radius and the core radius) and the outer cladding region 106 may have a second fluorinated region T2 defined by a thickness r₃ - r₂ (i.e., difference between the outer cladding radius and the inner cladding radius). The first fluorinated region T1 and the second fluorinated region T2 may extend radially outwards from the core region 102.

In accordance with an embodiment of the present disclosure, the fluorinated cladding region with the fluorinated region and lower or no doping of GeO2 in the core region result in the optical fiber 100 having the large effective area and mode field diameter (MFD), reduced non-linear effects, low attenuation, low latency, higher OSNR as compared to G652D.

In accordance with an embodiment of the present disclosure, the optical fiber 100 may be characterized by an attenuation of less than or equal to 0.17 dB/km at 1550 nm wavelength and an attenuation of less than or equal to 0.20 dB/km at 1625 nm wavelength, a cable cut-off wavelength of less than or equal to 1530 nm and a chromatic dispersion (CD) ranging between 17 picosecond/(nanometer-kilometer) and 23 picosecond/(nanometer-kilometer) at 1550 nm wavelength and less than or equal to 27 picosecond/(nanometer-kilometer) at 1625 nm wavelength. Further, the optical fiber 100 may have a dispersion slope in a range between 0.05-0.07 ps/nm²-km and an MFD of 12.5±0.5 µm at 1550 nm wavelength. Furthermore, the optical fiber 100 may have a macro-bend loss of less than or equal to 0.1 dB per 100 turns at 30 mm radius and at 1625 nm wavelength and a macro-bend loss of less than or equal to 0.03 dB per 100 turns at 30 mm radius and at 1550 nm wavelength.

Advantageously, the ultra-low loss optical fiber for long haul communications having an optimize design with a large effective area and mode field diameter (MFD), reduced non-linear effects, a low attenuation, a low latency, a high OSNR (Optical Signal to Noise Ratio) as compared to G652D optical fiber.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber (100), **characterized in that**:
a core region (102) defined by a core relative refractive index; and
a cladding region surrounding the core region (102), wherein the cladding region is down-doped for entire radial cladding thickness.

2. The optical fiber (100) as claimed in claim 1, wherein the core region (102) comprises a relative refractive index in a range of -0.06% to +0.06%.

3. The optical fiber (100) as claimed in claim 1, wherein the cladding region further comprising an inner cladding region (104) and an outer cladding region (106)

4. The optical fiber (100) as claimed in claim 3, wherein the inner cladding region (104) is defined by an inner cladding relative refractive index.

5. The optical fiber (100) as claimed in claim 3, wherein the outer cladding region (106) is defined by an outer cladding relative refractive index.

6. The optical fiber (100) as claimed in claim 3, wherein the inner cladding relative refractive index is less than the outer cladding relative refractive index.

7. The optical fiber (100) as claimed in claim 3, wherein the inner cladding region (104) has a first fluorinated region T1 defined by a thickness r₂ - r₁, which is a difference between an inner cladding radius and a core radius.

8. The optical fiber (100) as claimed in claim 3, wherein the outer cladding region (106) has a second fluorinated region T2 defined by a thickness r₃ - r₂, which is a difference between an outer cladding radius and the inner cladding radius.

9. The optical fiber (100) as claimed in claim 5, wherein the thickness of the first fluorinated region T1 is less than the thickness of the second fluorinated region T2.

10. The optical fiber (100) as claimed in claim 3, wherein the inner cladding region (104) is defined by an inner cladding radius ranging between 21 µm and 25 µm.

11. The optical fiber (100) as claimed in claim 3, wherein an inner cladding relative refractive index ranging between -0.29% and -0.32%.

12. The optical fiber (100) as claimed in claim 3, wherein the outer cladding region (106) is defined by an outer cladding radius ranging between 61.8 µm to 63,2 µm and an outer cladding relative refractive index ranging between -0.24% and -0.28%.

13. The optical fiber (100) as claimed in claim 1, wherein the optical fiber (100) is **characterized by** an attenuation of less than or equal to 0.17 dB/km at 1550 nm wavelength and an attenuation of less than or equal to 0.20 dB/km at 1625 nm wavelength and a mode field diameter (MFD) of 12.5±0.5 at 1550 nm wavelength.

14. The optical fiber (100) as claimed in claim 1, wherein the optical fiber (100) has macro-bend loss of less than or equal to 0.1 dB per 100 turns at 30 mm radius and at 1625 nm wavelength.

15. The optical fiber (100) as claimed in claim 1, wherein the optical fiber (100) has macro-bend loss of less than or equal to 0.03 dB per 100 turns at 30 mm radius and at 1550 nm wavelength.
